Europäisches Patentamt

European Patent Office

Office européen des brevets

(19)

(11) EP 0 678 531 B1

(12) **EUROPÄISCHE PATENTSCHRIFT**

(45) Veröffentlichungstag und Bekanntmachung des Hinweises auf die Patenterteilung:
**05.08.1998  Patentblatt 1998/32**

(51) Int Cl.⁶: **C08F 279/04**, C08F 279/02,
C08L 55/02, C08L 51/04
// (C08F279/02, 212:10)

(21) Anmeldenummer: **95105398.2**

(22) Anmeldetag: **10.04.1995**

(54) **ABS-Formmassen mit verbesserter Zähigkeit**

ABS moulding compositions with improved toughness

Masses à mouler d'ABS ayant une ténacité améliorée

(84) Benannte Vertragsstaaten:
**BE DE ES FR GB IT NL**

(30) Priorität: **22.04.1994  DE 4414124**

(43) Veröffentlichungstag der Anmeldung:
**25.10.1995  Patentblatt 1995/43**

(73) Patentinhaber: **BAYER AG**
**51368 Leverkusen (DE)**

(72) Erfinder:
- **Eichenauer, Herbert, Dr.**
  **D-41539 Dormagen (DE)**
- **Jansen, Ulrich, Dr.**
  **D-41541 Dormagen (DE)**
- **Piejko, Karl-Erwin, Dr.**
  **D-51467 Bergisch Gladbach (DE)**

(56) Entgegenhaltungen:
EP-A- 0 253 236     DD-A- 71 615
DE-A- 1 469 844     DE-A- 3 640 337

## Beschreibung

Die Erfindung betrifft in Emulsion hergestellte thermoplastische Formmassen vom ABS-Typ mit gegenüber bekannten ABS-Formmassen verbesserten Eigenschaften, insbesondere hoher Zähigkeit, leichter Verarbeitbarkeit und gutem Oberflächenglanz.

ABS-Formmassen sind Zweiphasenkunststoffe aus:

I. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;

II. mindestens einem Pfropfpolymerisat, welches hergestellt worden ist durch Pfropfreaktion eines oder mehrerer der unter I. genannten Monomeren auf Butadien-Homo- oder Copolymerisat ("Pfropfgrundlage"). Dieses Pfropfpolymerisat ("Elastomerphase" oder "Pfropfkautschuk") bildet die disperse Phase im Matrixharz.

Bei gleicher Matrix wird die Zähigkeit einer ABS-Formmasse im wesentlichen durch den Pfropfkautschuk bestimmt. Die mit üblichen ABS-Formmassen erreichbare Zähigkeit reicht jedoch für stark beanspruchte Formteile noch nicht immer mit der notwendigen Sicherheit aus. Es besteht daher Bedarf an Pfropfkautschuken, auf deren Basis ABS-Formmassen mit erhöhter Zähigkeit hergestellt werden können, ohne daß sich die übrigen Eigenschaften wie Verarbeitbarkeit und Oberflächenglanz verschlechtern.

Aus der DE-AS 1 813 719 sind zähe, gut verarbeitbare ABS-Formmassen bekannt, die erhalten werden durch einstufige, unter Druck ablaufende Emulsions-Pfropfpolymerisation von 75 bis 90 Gew.-Teilen eines Monomerengemisches auf 10 bis 25 Gew.-Teile eines Gemisches zweier Kautschuklatices, wovon einer ein reines Polybutadien und der andere ein SBR-Latex mit einem Styrolgehalt <50% und einer bestimmten Teilchengröße ist.

Die US-A- 3 509 238 beschreibt ABS-Produkte, die unter Verwendung zweier Pfropfpolymerisate hergestellt werden, von denen eines schwach, das andere stark gepfropft ist. Diese Produkte haben jedoch unzureichende Eigenschaften bei tiefen Temperaturen.

In der US-A- 3 928 494 sind ABS-Produkte mit zwei verschieden stark gepfropften Pfropfpolymerisaten beschrieben, bei denen das schwächer bepfropfte feinteilige Material sich bei Sprühtrocknung oder Koagulation zu Teilchenaggregaten zusammenlagert. Derartige Aggregate stellen locker gebundene Gebilde dar, die unter hohen Temperaturen und Scherkräften, wie sie beispielsweise bei der Spritzgußverarbeitung auftreten können, wieder auseinandergerissen werden und dann zu nicht ausreichenden Produktzähigkeiten führen.

In der EP-A 116 330 werden ABS-Formmassen auf Basis zweier unterschiedlicher Butadienpolymerisate mit einem speziellen Pfropfstellenabstand der aus den Butadienpolymerisaten hergestellten Pfropfpolymerisate beschrieben. Diese Produkte weisen zwar eine gute Zähigkeit bei Raumtemperatur auf, die Werte für Tieftemperaturzähigkeit und Oberflächenglanz sind jedoch für hohe Anforderungen nicht ausreichend.

Es wurde nun gefunden, daß bei der Verwendung eines Gemisches genau definierter Kautschuklatices und durch Anwendung spezieller Reaktionsbedingungen bei der Pfropfkautschukherstellung ABS-Formmassen erhalten werden, die gleichzeitig hohe Werte für die Schlagzähigkeit und einen guten Oberflächenglanz aufweisen.

Gegenstand der Erfindung sind thermoplastische Formmassen vom ABS-Typ aus

A) mindestens einem Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines weiteren Vinylmonomeren copolymerisiert enthalten, und wobei das Massenverhältnis von eingesetzten Monomeren zu eingesetzten Butadienpolymerisaten 25:75 bis 70:30 beträgt, und

B) mindestens einem Copolymerisat aus Styrol und Acrylnitril im Gewichtsverhältnis 90:10 bis 50:50, wobei das Styrol und/oder Acrylnitril ganz oder teilweise durch α-Methylstyrol oder Methylmethacrylat oder N-Phenylmaleinimid ersetzt werden kann,

dadurch gekennzeichnet, daß der Butadienpolymerisatlatex (A) einen Teilchendurchmesser $d_{50}$ ≤250 nm, vorzugsweise 150 bis 250 nm, eine Breite der Teilchengrößenverteilung (gemessen als $d_{90}$-$d_{10}$ aus der integralen Teilchengrößenverteilung) von 500 bis 1000 nm, vorzugsweise von 700 bis 850 nm, und einen Gelgehalt ≤70 Gew.-%, vorzugsweise 50 bis 65 Gew.-%, besitzt, der Butadienpolymerisatlatex (B) einen Teilchendurchmesser $d_{50}$ ≥300 nm, vorzugsweise 350 bis 450 nm, eine Breite der Teilchengrößenverteilung (gemessen als $d_{90}$-$d_{10}$ aus der integralen Teilchengrößenverteilung) von 50 bis 500 nm, vorzugsweise von 100 bis 400 nm, und einen Gelgehalt ≥70 Gew.-%, vorzugsweise 75 bis 90 Gew.-%, besitzt und die Pfropfpolymerisation durch Monomerenzulauf zum Gemisch der Butadienpolymerisatlatices (A) und (B) in der Weise erfolgt, daß innerhalb der ersten Hälfte der Monomerenzulaufzeit 55 bis 90 Gew.-%, vorzugsweise 60 bis 80 Gew.-% und besonders bevorzugt 65 bis 75 Gew.-% der Monomeren zudosiert werden.

Bei der Pfropfpolymerisation wird ein Gemisch aus mindestens zwei Butadienpolymerisatlatices, je einen von Typ (A) und (B), eingesetzt. Das Gewichtsverhältnis (A):(B) beträgt, bezogen auf den jeweiligen Feststoffanteil der Latices, 90:10 bis 10:90, vorzugsweise 60:40 bis 30:70.

Die Butadienpolymerisatlatices (A) und (B) können durch Emulsionspolymerisation von Butadien hergestellt werden. Diese Polymerisation ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispiele für solche Monomere sind Isopren, Chloropren, Acrylnitril, Styrol, $\alpha$-Methylstyrol, $C_1$-$C_4$-Alkylstyrole, $C_1$-$C_8$-Alkylacrylate, $C_1$-$C_8$-Alkylmethacrylate, Alkylenglycoldiacrylate, Alkylenglykoldimethacrylate, Divinylbenzol; vorzugsweise wird Butadien alleine eingesetzt. Es ist auch möglich, nach bekannten Methoden zunächst ein feinteiliges Butadienpolymerisat herzustellen und es anschließend in bekannter Weise zur Einstellung der erforderlichen Teilchengröße zu agglomerieren.

Einschlägige Techniken sind beschrieben (vergl. EP-A- 0 029 613; EP-A- 0 007 810; DD-PS 144 415 DE-AS 1 233 131; DE-AS 1 258 076; DE-OS 2 101 650; US-A- 1 379 391).

Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Prinzipiell kann man die Butadienpolymerisatlatices (A) und (B) auch herstellen durch Emulgieren von feinteiligen Butadienpolymerisaten in wäßrigen Medien (vergl. japanische Patentanmeldung 55 125 102).

Der Butadienpolymerisatlatex (A) besitzt einen mittleren Teilchendurchmesser $d_{50} \leq 250$ nm, vorzugsweise 150 bis 250 nm, eine Breite der Teilchengrößenverteilung (gemessen als $d_{90}$-$d_{10}$ aus der integralen Teilchengrößenverteilung) von 500 bis 1000 nm, vorzugsweise von 700 bis 850 nm, und einen Gelgehalt $\leq 70$ Gew.-%, vorzugsweise 50 bis 65 Gew.-%.

Der Butadienpolymerisatlatex (B) besitzt einen mittleren Teilchendurchmesser $d_{50} \geq 300$ nm, vorzugsweise 350 bis 450 nm, eine Breite der Teilchengrößenverteilung (gemessen als $d_{90}$-$d_{10}$ aus der integralen Teilchengrößenverteilung) von 50 bis 500 nm, vorzugsweise von 100 bis 400 nm, und einen Gelgehalt $\geq 70$ Gew.-%, vorzugsweise 75 bis 90 Gew.-%.

Die Bestimmung des mittleren Teilchendurchmesser $d_{50}$ sowie der $d_{10}$- und $d_{90}$-Werte kann durch Ultrazentrifugenmessung erfolgen (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A) und (B) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt.

Die Pfropfpolymerisation kann so durchgeführt werden, daß das Monomerengemisch kontinuierlich zu dem Gemisch der Butadienpolymerisatlatices (A) und (B) gegeben und polymerisiert wird.

Dabei muß ein spezielles Monomer: Kautschuk-Verhältnis und eine definierte Vorgehensweise bei der Monomerzugabe zum Kautschuklatex eingehalten werden.

Zur Erzeugung der erfindungsgemäßen Produkte werden 25 bis 70 Gew.-Teile, vorzugsweise 30 bis 60 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von 30 bis 75 Gew.-Teilen, vorzugsweise 40 bis 70 Gew.-Teilen (jeweils bezogen auf Feststoff) des Butadienpolymerisatlatex-Gemisches aus (A) und (B) polymerisiert.

Die bei dieser Pfropfpolymerisation eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 75:25, wobei Styrol und/oder Acrylnitril teilweise durch copolymerisierbare Monomere, vorzugsweise durch $\alpha$-Methylstyrol, Methylmethacrylat oder N-Phenylmaleinimid ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe).

Geeignete Molekulargewichtsregler sind beispielsweise n-Dodecylmercaptan, t-Dodecylmercaptan, dimeres α-Methylstyrol.

Als Initiatoren kommen anorganische und organische Peroxide, z.B. $H_2O_2$, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium-, oder Kaliumpersulfat, Kaliumperphosphat, Natriumperborat sowie Redox-Systeme in Betracht, die sich aus einem in der Regel organischen Oxidationsmittel und einem Reduktionsmittel zusammensetzen, wobei im Reaktionsmedium zusätzlich Schwermetallionen vorhanden sind (siehe H. Logemann in Houben-Weyl, Methoden der Organischen Chemie, Band 14/1, S. 263 bis 297).

Die Reaktionstemperatur ist 25°C bis 160°C, vorzugsweise 40°C bis 90°C. Als Emulgatoren können die oben genannten Verbindungen eingesetzt werden.

Zur Erzeugung der erfindungsgemäßen Produkte muß die Pfropfpolymerisation durch Monomerenzulauf derart durchgeführt werden, daß innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Schließlich wird das so erzeugte Pfropfpolymerisat mit mindestens einem thermoplastischen Vinylharz gemischt. Dies ist auf verschiedene Weise möglich. Wurde das Vinylharz selbst durch Emulsionspolymerisation erzeugt, so können die Latices gemischt und gemeinsam ausgefällt und aufgearbeitet werden. Wurde das Vinylharz durch Lösungs- oder Massepolymerisation hergestellt, so muß das Pfropfpolymerisat durch bekannte Verfahren, beispielsweise durch Sprühtrocknung oder durch Zusatz von Salzen und/oder Säuren, Waschen der Fällprodukte und Trocknung des Pulvers isoliert und danach mit dem Vinylharz vermischt werden (vorzugsweise auf Mehrwalzenstühlen, Mischextrudern oder Innenknetern); diese Methode wird bevorzugt angewandt.

Als Vinylharze werden vorzugsweise Copolymerisate des Styrols und Acrylnitrils im Gewichtsverhältnis 90:10 bis 50:50 eingesetzt, wobei Styrol und/oder Acrylnitril ganz oder teilweise durch α-Methylstyrol und/oder Methylmethacrylat ersetzt sein kann; gegebenenfalls kann anteilmäßig bis zu 30 Gew.-%, bezogen auf Vinylharz, eines weiteren Monomeren aus der Reihe Maleinsäureanhydrid, Maleinsäureimid, N-(Cyclo)-Alkylmaleinimid, N-(Alkyl)-Phenylmaleinimid mitverwendet werden.

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Der Anteil des Pfropfkautschuks an den erfindungsgemäßen Formmassen läßt sich in weiten Grenzen variieren; vorzugsweise beträgt er 10 bis 80 Gew.-%, besonders bevorzugt 20 bis 75 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

## Beispiele

## Beispiel 1

11,6 Gew.-Teile (gerechnet als Feststoff) eines durch radikalische Polymerisation hergestellten anionisch emulgierten Polybutadienlatex (Latex A) mit einem $d_{50}$-Wert von 214 nm, einem $d_{90}$-$d_{10}$-Wert von 725 nm und einem Gelgehalt von 59 Gew.-% und 46,4 Gew.-Teile (gerechnet als Feststoff) eines durch radikalische Polymerisation hergestellten anionisch emulgierten Polybutadienlatex (Latex B) mit einem $d_{50}$-Wert von 432 nm, einem $d_{90}$-$d_{10}$-Wert von 128 nm und einem Gelgehalt von 81 Gew.-% werden mit Wasser auf einen Feststoffgehalt von ca. 20 Gew.-% gebracht, wonach auf 64°C erwärmt und mit 0,5 Gew.-Teilen Kaliumperoxodisulfat (gelöst in Wasser) versetzt wird. Danach werden 42 Gew.-Teile eines Gemisches aus 72 Gew.-% Styrol und 28 Gew.-% Acrylnitril und 0,1 Gew.-Teile tert.-Dodecylmercaptan innerhalb von 4 h derart zugegeben, daß innerhalb der ersten 2 h 75 Gew.-% der Gesamtmonomerenmenge zum Reaktionsgemisch zudosiert werden; parallel dazu wird 1 Gew.-Teil (gerechnet als Festsubstanz) des Natriumsalzes eines Harzsäuregemisches (Dresinate 731, gelöst in alkalisch eingestelltem Wasser) über 4 Stunden zudosiert. Nach einer 4-stündigen Nachreaktionszeit wird der Pfropflatex nach Zugabe von ca. 1,0 Gew.-Teilen eines phenolischen Antioxidans mit einem Magnesiumsulfät/Essigsäure-Gemisch koaguliert und nach dem Waschen mit Wasser das resultierende Pulver bei 70°C im Vakuum getrocknet.

45 Gew.-Teile dieses Pfropfpolymerisats werden mit 55 Gew.-Teilen eines Styrol/Acrylnitril-Copolymerharzes (72: 28, $\overline{M}_w$ = 115000, $\overline{M}_w/\overline{M}_n$-1≤2), 2 Gew.-Teilen Ethylendiaminbisstearylamid und 0,1 Gew.-Teilen eines Silikonöls in einem Innenkneter vermischt und anschließend zu Prüfstäben und zu einer ebenen Platte (zur Beurteilung der Oberfläche) verspritzt.

Folgende Daten wurden ermittelt:

Kerbschlagzähigkeit bei Raumtemperatur ($a_k$RT) und bei -40°C ($a_k$-40°C) nach ISO 180/1A (Einheit: kJ/m$^2$), Kugeldruckhärte ($H_c$) nach DIN 53 456 (Einheit: N/mm$^2$), Wärmeformbeständigkeit (Vicat B) nach DIN 53 460 (Einheit: °C), Oberflächenglanz nach DIN 67 530 bei einem Reflektionswinkel von 60° (Reflektometerwert); die Beurteilung der thermoplastischen Fließfähigkeit erfolgte durch Messung des notwendigen Fülldruckes bei 240°C (Einheit: bar) (siehe F Johannaber, Kunststoffe 74 (1984), 1, Seiten 2-5).

Die Ergebnisse sind in Tabelle 1 zusammengestellt.

## Beispiel 2

Beispiel 1 wird wiederholt, wobei bei der Pfropfpolymerisationsreaktion ein Gemisch aus 23,2 Gew.-Teilen (gerechnet als Feststoff) Latex A und 34,8 Gew.-Teilen (gerechnet als Feststoff) Latex B eingesetzt wird.

## Beispiel 3

Beispiel 1 wird wiederholt, wobei bei der Pfropfpolymerisationsreaktion ein Gemisch aus 29 Gew.-Teilen (gerechnet als Feststoff) Latex A und 29 Gew.-Teilen (gerechnet als Feststoff) Latex B eingesetzt wird.

## Beispiel 4

Beispiel 1 wird wiederholt, wobei bei der Pfropfpolymerisationsreaktion ein Gemisch aus 46,4 Gew.-Teilen (gerechnet als Feststoff) Latex A und 11,6 Gew.-Teilen (gerechnet als Feststoff) Latex B eingesetzt wird.

## Beispiel 5 (Vergleich)

Beispiel 1 wird wiederholt, wobei bei der Pfropfpolymerisationsreaktion 58 Gew.-Teile (gerechnet als Feststoff) Latex A eingesetzt werden.

## Beispiel 6 (Vergleich)

Beispiel 1 wird wiederholt, wobei bei der Pfropfpolymerisationsreaktion 58 Gew.-Teile (gerechnet als Festostoff) Latex B eingesetzt werden.

## Beispiel 7 (Vergleich)

Beispiel 1 wird wiederholt, wobei bei der Pfropfpolymerisatonsreaktion ein Gemisch aus 29 Gew.-Teilen (gerechnet als Feststoff) eines durch radikalische Polymerisation hergestellten anionisch emulgierten Polybutadienlatex mit einem $d_{50}$-Wert von 246 nm, einem $d_{90}$-$d_{10}$-Wert von 155 nm und einem Gelgehalt von 57 Gew.-% und 29 Gew.-Teilen (gerechnet als Feststoff) eines durch radikalische Polymerisation hergestellten anionisch emulgierten Polybutadienlatex mit einem $d_{50}$-Wert von 430 nm, einem $d_{90}$-$d_{10}$-Wert von 612 nm und einem Gelgehalt von 85 Gew.-% eingesetzt werden.

## Beispiel 8 (Vergleich)

Beispiel 1 wird wiederholt, wobei die Zudosierung des Monomerengemisches so erfolgt, daß innerhalb der ersten 2 h 50 Gew.-% der Gesamtmonomermenge zum Reaktionsgemisch zudosiert werden.

## Beispiel 9 (Vergleich)

Beispiel 1 wird wiederholt, wobei die Zudosierung des Monomerengemisches so erfolgt, daß innerhalb der ersten 2 h 25 Gew.-% der Gesamtmonomermenge zum Reaktionsgemisch zudosiert werden.

Aus den in Tabelle 1 zusammengestellten Prüfwerten ist ersichtlich, daß nur die erfindungsgemäß hergestellten Formmassen eine Kombination aus hoher Zähigkeit bei Raumtemperatur und tiefer Temperatur und gutem Oberflächenglanz aufweisen. Dabei ist wichtig, daß die Werte für die sonstigen technologisch wichtigen ABS-Eigenschaften wie Härte, Wärmeformbeständigkeit und insbesondere thermoplastische Fließfähigkeit als Maß für die Verarbeitbarkeit nicht negativ beeinflußt werden.

Tabelle 1:

| Prüfdaten der untersuchten Formmassen | | | | | | |
|---|---|---|---|---|---|---|
| Beispiel | $a_k$RT (kJ/m$^2$) | $a_k$-40°C (kJ/m$^2$) | $H_c$ (N/mm$^2$) | Vicat B (°C) | Fülldruck (bar) | Glanzgrad |
| 1. | 45 | 28 | 85 | 97 | 208 | 88 |
| 2. | 43 | 26 | 85 | 96 | 194 | 87 |
| 3. | 43 | 26 | 82 | 96 | 195 | 86 |
| 4. | 43 | 26 | 85 | 96 | 194 | 82 |
| 5. (Vergleich) | 40 | 23 | 83 | 96 | 183 | 80 |
| 6. (Vergleich | 38 | 24 | 81 | 99 | 195 | 83 |
| 7. (Vergleich | 36 | 21 | 83 | 96 | 198 | 80 |
| 8. (Vergleich) | 41 | 25 | 84 | 96 | 196 | 80 |
| 9. (Vergleich | 37 | 22 | 85 | 96 | 198 | 80 |

**Patentansprüche**

1. ThermoplastischeFormmassen vom ABS-Typ aus

   A) mindestens einem Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch $\alpha$-Methylstyrol, Methylmethacrylat oder N-Phenylmaleinimid, in Gegenwart von mindestens zwei Butadienpolymerisatlatices vom Type (A) und (B), welche jeweils 0 bis 50 Gew.-% eines weiteren Vinylmonomeren copolymerisiert enthalten und wobei das Massenverhältnis von eingesetzten Monomeren zu eingesetzten Butadienpolymerisaten 25:75 bis 70:30 beträgt und

   B) mindestens einem Copolymerisat aus Styrol und Acrylnitril im Gewichtsverhältnis 90:10 bis 50:50, wobei Styrol und/oder Acrylnitril ganz oder teilweise durch $\alpha$-Methylstyrol, Methylmethacrylat oder N-Phenylmaleinimid ersetzt werden kann, dadurch gekennzeichnet, daß der Butadienpolymerisatlatex (A) einen Teilchendurchmesser $d_{50} \leq 250$ nm, eine Breite der Teilchengrößenverteilung (gemessen als $d_{90}$-$d_{10}$ aus der integralen Teilchengrößenverteilung) von 500 bis 1000 nm und einen Gelgehalt $\leq 70$ Gew.-% besitzt, der Butadienpolymerisatlatex (B) einen Teilchendurchmesser $d_{50} \geq 300$ nm, eine Breite der Teilchengrößenverteilung (gemessen als $d_{90}$-$d_{10}$ aus der integralen Teilchengrößenverteilung) von 50 bis 500 nm und einen Gelgehalt $\geq 70$ Gew.-% besitzt und die Pfropfpolymerisation durch Monomerenzulauf zum Gemisch der Butadienpolymerisatlatices (A) und (B) in der Weise erfolgt, daß innerhalb der ersten Hälfte der Monomerenzulaufzeit 55 bis 90 Gew.-% der Monomeren zudosiert werden.

2. Thermoplastische Formmassen gemäß Anspruch 1 dadurch gekennzeichnet, daß der Butadienpolymerisatlatex (A) einen Teilchendurchmesser $d_{50}$ von 150 bis 250 nm, eine Breite der Teilchengrößenverteilung (gemessen als $d_{90}$-$d_{10}$ aus der integralen Teilchengrößenverteilung) von 700 bis 850 nm und einen Gelgehalt von 50 bis 65 Gew.-% besitzt, der Butadienpolymerisatlatex (B) einen Teilchendurchmesser $d_{50}$ von 350 bis 450 nm, eine Breite der Teilchengrößenverteilung (gemessen als $d_{90}$-$d_{10}$ aus der integralen Teilchengrößenverteilung) von 100 bis 400 nm und einen Gelgehalt von 75 bis 90 Gew.-% besitzt und die Pfropfpolymerisation durch Monomerenzulauf zum Gemisch der Butadienpolymerisatlatices (A) und (B) in der Weise erfolgt, daß innerhalb der ersten Hälfte der Monomerenzulaufzeit 60 bis 80 Gew.-% der Monomeren zudosiert werden.

3. Verwendung der thermoplastischen Formmassen gemäß Ansprüchen 1 und 2 zur Herstellung von Formteilen.

## Claims

1. Thermoplastic moulding compositions of the ABS type made from

   A) at least one graft polymer which is obtainable by emulsion polymerisation of styrene and acrylonitrile in the ratio by weight of 90:10 to 50:50, wherein styrene and/or acrylonitrile may be completely or partly replaced by $\alpha$-methylstyrene, methyl methacrylate or N-phenylmaleic imide, in the presence of at least two butadiene polymer latices of the type (A) and (B) which each incorporate 0 to 50 wt.% of a further vinyl monomer and wherein the ratio by mass of the monomers used to the butadiene polymer used is 25:75 to 70:30 and

   B) at least one copolymer of styrene and acrylonitrile in the ratio by weight of 90:10 to 50:50, wherein styrene and/or acrylonitrile may be completely or partly replaced by $\alpha$-methylstyrene, methyl methacrylate or N-phenylmaleic imide, characterised in that butadiene polymer latex (A) has a particle diameter $d_{50} \leq 250$ nm, a width of particle size distribution (measured as $d_{90}$-$d_{10}$ from the integrated particle size distribution) of 500 to 1000 nm and a gel content $\leq 70$ wt.%, butadiene polymer latex (B) has a particle diameter $d_{50} \geq 300$ nm, a width of particle size distribution (measured as $d_{90}$-$d_{10}$ from the integrated particle size distribution) of 50 to 500 nm and a gel content $\geq 70$ wt.% and graft polymerisation is performed by introducing monomers to the mixture of butadiene polymer latices (A) and (B) in such away that 55 to 90 wt.% of the monomers are added within the first half of the monomer introduction time.

2. Thermoplastic moulding compositions according to Claim 1 characterised in that butadiene polymer latex (A) has a particle diameter $d_{50}$ of 150 to 250 nm, a width of particle size distribution (measured as $d_{90}$-$d_{10}$ from the integrated particle size distribution) of 700 to 850 nm and a gel content of 50 to 65 wt.%, butadiene polymer latex (B) has a particle diameter $d_{50}$ of 350 to 450 nm, a width of particle size distribution (measured as $d_{90}$-$d_{10}$ from the integrated particle size distribution) of 100 to 400 nm and a gel content of 75 to 90 wt.% and graft polymerisation is performed by introducing monomers to the mixture of butadiene polymer latices (A) and (B) in such away that 60 to 80 wt.% of the monomers are added within the first half of the monomer introduction time.

3. Use of the thermoplastic moulding compositions in accordance with Claims 1 and 2 to produce moulded articles.

## Revendications

1. Masses à mouler thermoplastiques de type ABS constituées par

   A) au moins un polymère greffé que l'on obtient par polymérisation en émulsion de styrène et d'acrylonitrile dans un rapport pondéral de 90:10 à 50:50, le styrène et/ou l'acrylonitrile pouvant être remplacés, en tout ou en partie, par l'$\alpha$-méthylstyrène, le méthacrylate de méthyle ou le N-phénylmaléimide, en présence d'au moins deux latex de polymères de butadiène de type (A) et (B) qui contiennent respectivement un monomère vinylique supplémentaire à l'état copolymérisé à concurrence de 0 à 50% en poids,. et dans lequel le rapport massique des monomères mis en oeuvre aux polymères de butadiène mis en oeuvre s'élève de 25:75 à 70: 30, et

   B) au moins un copolymère de styrène et d'acrylonitrile dans le rapport pondéral de 90:10 à 50:50, le styrène et/ou l'acrylonitrile pouvant être remplacés, en tout ou en partie, par l'$\alpha$-méthylstyrène, le méthacrylate de méthyle ou le N-phénylmaléimide, caractérisées en ce que le latex de polymère de butadiène (A) possède un diamètre de particules moyen $d_{50} \leq 250$ nm, une largeur de la distribution granulométrique (mesurée sous forme de $d_{90}$-$d_{10}$ à partir de la distribution granulométrique intégrale) de 500 à 1000 nm et une teneur en gel $\leq 70\%$ en poids, le latex de polymère de butadiène (B) possède un diamètre de particules $d_{50} \geq 300$ nm, une largeur de la distribution granulométrique (mesurée sous forme de $d_{90}$-$d_{10}$ à partir de la distribution granulométrique intégrale) de 50 à 500 nm et une teneur en gel $\geq 70\%$ en poids, la polymérisation par greffage via addition des monomères au mélange des latex de polymères de butadiène (A) et (B) ayant lieu de telle sorte que l'on ajoute, de manière dosée, au cours de la première moitié du temps d'addition des monomères, de 55 à 90% en poids des monomères.

2. Masses à mouler thermoplastiques selon la revendication 1, caractérisées en ce que le latex de polymère de butadiène (A) possède un diamètre de particules $d_{50}$ de 150 à 250 nm, une largeur de la distribution granulométrique (mesurée sous forme de $d_{90}$-$d_{10}$ à partir de la distribution granulométrique intégrale) de 700 à 850 nm et une teneur en gel de 50 à 65% en poids, le latex de polymère de butadiène (B) possède un diamètre de particules $d_{50}$ de 350 à 450 nm, une largeur de la distribution granulométrique (mesurée sous forme de $d_{90}$-$d_{10}$ à - partir de la distribution granulométrique intégrale) de 100 à 400 nm et une teneur en gel de 75 à 90% en poids, la polymérisation par greffage via addition des monomères au mélange des latex de polymères de butadiène (A) et (B) ayant lieu de telle sorte que l'on ajoute, de manière dosée, au cours de la première moitié du temps d'addition des monomères, de 60 à 80% en poids des monomères.

3. Utilisation des masses à mouler thermoplastiques selon les revendications 1 et 2, pour la préparation d'éléments moulés.